# EUROPEAN PATENT SPECIFICATION

(11) **EP 4 030 697 B1**
(45) Date of publication and mention of the grant of the patent: **22.10.2025**
(21) Application number: 19947793.6
(22) Date of filing: 30.09.2019
(51) Int. Cl.: H04W 76/25, H04L 12/28, H04W 84/00, H04B 7/185, H04W 88/08, H04W 92/04, H04W 76/22, H04W 84/06

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 20.07.2022
(73) Proprietor: Huawei Technologies Co., Ltd., Longgang District Shenzhen, Guangdong 518129 (CN)
(72) Inventor: WU, Yedan, Shenzhen, Guangdong 518129 (CN); GENG, Tingting, Shenzhen, Guangdong 518129 (CN); ZHENG, Lili, Shenzhen, Guangdong 518129 (CN)
(74) Representative: Pfenning, Meinig & Partner mbB
(86) International application number: PCT/CN2019/109320
(87) International publication number: WO 2021/062586

(56) References cited:
- WO-A1-2020/163993
- CN-A- 102 355 692
- CN-A- 102 572 836
- US-A1- 2013 324 119
- US-A1- 2016 165 476
- US-A1- 2019 037 425
- NTT DOCOMO ET AL: "Further analysis of supporting UP solution by existing RRC states and procedures", vol. RAN WG2, no. Budapest, HU; 20160119 - 20160121, 18 January 2016 (2016-01-18), XP051054709, Retrieved from the Internet <URL:http://www.3gpp.org/ftp/Meetings_3GPP_SYNC/RAN2/Docs/> [retrieved on 20160118]
- NOKIA ET AL: "Analysis on Interface management between satellite and network entity on ground", vol. RAN WG3, no. Xi'an, China; 20190408 - 20190412, 6 April 2019 (2019-04-06), XP051702818, Retrieved from the Internet <URL:http://www.3gpp.org/ftp/Meetings%5F3GPP%5FSYNC/RAN3/Docs/R3%2D191544%2Ezip> [retrieved on 20190406]
- INTERDIGITAL INC: "Details of Conditional Handover procedure for LTE", 3GPP DRAFT; R2-1906396 (R16 LTE MOB WI AI12331 DETAILS OF CHO IN LTE), vol. RAN WG2, 13 May 2019 (2019-05-13), Reno, United States, pages 1 - 3, XP051729861

## Description

### TECHNICAL FIELD

Embodiments of this application relate to the field of communication technologies, and in particular, to a communication method, a communications apparatus, a communication system, a computer program and a computer storage medium.

### BACKGROUND

In a communications system, a base station or some base station functions may be deployed in a mobile communications device, and then seamless cell coverage is implemented by moving the mobile communications device. The mobile communications device may be a satellite in a non-terrestrial network (non-terrestrial network, NTN), or the like.

In this communications system, the mobile communications device providing an access service for a terminal device establishes a communication connection to another communications device deployed at a fixed position (for example, a core network device, a base station, or a device having some functions of a base station) through a corresponding interface, to connect the terminal device to a data network (data network, DN), and finally implement a service of the terminal device.

However, when establishing the connection to the another communications device deployed at the fixed location, the mobile communications device needs to send configuration information of the mobile communications device to the peer device by using signaling to maintain the interface. In a scenario in which the mobile communications device has high-speed mobility, to ensure service continuity of the terminal device, the mobile communications device needs to frequently establish connections to other communications devices. Further, in each connection establishment process, the mobile communications device needs to send and receive configuration information for maintaining an interface through signaling interaction, which causes high signaling overheads of the mobile communications device.

NTT DOCOMO EL AL: "Further analysis of supporting UP solution by existing RRC states and procedures", 3GPP DRAFT; R2-160419, 2016-01-18, discusses supporting UP solution by existing RRC states and procedures.

NOKIA ET AL: "Analysis on Interface management between satellite and network entity on ground", 3GPP DRAFT, R3-191544, 2019-04-06, discusses interface management between satellite and network entity on ground.

WO2020/163993 A1 discloses a centralized network device change procedure.

### SUMMARY

In order to solve the above-mentioned problems, this application provides a communication method according to claim 1, a communication method according to claim 6, a first communications device according to claim 11, a second communications device according to claim 12, a communication system according to claim 13, a computer program according to claim 14, and a computer storage medium according to claim 15, to reduce signaling overheads when a mobile communications device that has base station functions or a part of base station functions in a communications system establishes a connection to another communications device.

### BRIEF DESCRIPTION OF DRAWINGS

FIG. 1A is a schematic diagram of an application scenario according to an embodiment of this application;
FIG. 1B is a schematic diagram of an application scenario according to an embodiment of this application;
FIG. 1C-1 and FIG. 1C-2 are a schematic diagram of an application scenario according to an embodiment of this application;
FIG. 1D is a schematic diagram of an application scenario according to an embodiment of this application;
FIG. 1E is a schematic diagram of an application scenario according to an embodiment of this application;
FIG. 2 is a schematic diagram of a structure of a base station according to an embodiment of this application;
FIG. 3 is a flowchart of a communication method according to an embodiment of this application;
FIG. 4 is a flowchart of a communication method according to an embodiment of this application;
FIG. 5 is a schematic diagram of a structure of a communications apparatus according to an embodiment of this application; and
FIG. 6 is a schematic diagram of a structure of a communications device according to an embodiment of this application.

### DESCRIPTION OF EMBODIMENTS

This application provides a communication method and a communications apparatus, to reduce signaling overheads when a communications device in a communications system establishes connections to another communications device for a plurality of times. The method and the apparatus are based on a same concept. Because a problem-resolving principle of the method is similar to that of the apparatus, mutual reference may be made to implementations of the apparatus and the method. Repeated parts are not described in detail.

In solutions provided in the embodiments of this application, a first communications device sends first duration to a second communications device, to indicate duration in which the second communications device stores configuration information of the first communications device. In this way, in a process of reestablishing a connection between the first communications device and the second communications device, the second communications device stores the configuration information of the first communications device based on the first duration. In this case, the first communications device does not need to resend the configuration information of the first communications device to the second communications device. Therefore, this method can reduce signaling overheads of the first communications device sending the configuration information of the first communications device in the connection establishment process, and reduce power consumption and electricity consumption of the first communications device.

Some terms in this application are described below, so as to help a person skilled in the art have a better understanding.
(1) A communications device is a device in which a communications system implements data communications by establishing a connection to another device. In the embodiments of this application, the communications device includes a base station, and a core network device that is in a core network and that can be connected to the base station (for example, an access and mobility management function (access and mobility management function, AMF) entity), may further include a device having some base station functions, for example, a distributed unit (distributed unit, DU) and a centralized unit (centralized unit, CU), or may be a relay device/RRU that is in an access network and that can be connected to a base station.

In the embodiments of this application, a communication connection is established between two communications devices through a corresponding interface, to connect a terminal device to a DN, and finally a service of the terminal device is implemented. In addition, one of the communications devices has frequent/multiple connection establishment requirements. For example, a communications device a needs to repeatedly establish connections to a communications device b, a communications device c, and the like. For example, the communications device a may have high-speed mobility. For example, the communications device a is disposed on a facility moving at a high speed, for example, a satellite, a high-speed railway, a vehicle, a ship, and an airplane. In the following embodiments of this application, a communications device with high-speed mobility is described by using a satellite as an example.

(2) A connection between two communications devices is implemented through a corresponding interface. When communications devices are different, connections between the communications devices and interfaces used by the communications devices are also different.

For example, in an LTE communications system (may also be referred to as a 4G communications system), a connection between two base stations is implemented through an X2 interface, and the connection may be referred to as an X2 connection for short. In a 5G communications system, a connection between two base stations is implemented through an Xn interface, and the connection may be referred to as an Xn connection for short. A connection between a base station and an AMF entity in an evolved packet core (Evolved Packet Core, EPC) (may also be referred to as a 4G core network) is implemented through an N2 interface, and the connection may be referred to as an N2 connection for short. A connection between a base station and an AMF entity in a 5G core (5G core, 5GC) network is implemented through an Ng interface, and the connection may be referred to as an Ng connection for short. A connection between a DU and a CU is implemented through an F1 interface, and the connection may be referred to as an F1 connection for short.

It should be noted that, the connection (or interface) between the two communications devices is maintained by the two communications devices saving configuration information of the peer communications device. For example, if a communications device a and a communications device b maintain a connection between the two communications devices, the communications device a needs to store configuration information of the communications device b, and the communications device b also needs to store configuration information of the communications device a. In this way, the communications device a may send signaling and data to the communications device b based on the configuration information of the communications device b. The communications device b may send signaling and data to the communications device a based on the configuration information of the communications device a. In the embodiments of the present invention, the configuration information may be context information.

(3) Configuration information of a communications device is sent to a peer communications device in a process in which the communications devices establish a connection, so that the peer communications device performs interface maintenance. The configuration information of the communications device varies based on different interfaces between the communications devices.

For example, in a scenario in which a base station establishes a connection to an AMF entity, the base station needs to receive and store configuration information of the AMF entity, for example, an identifier of the AMF entity, capability information of the AMF entity, a supported public network list, and a supported slice list. The AMF entity also needs to receive and store configuration information of the base station, for example, an identifier of the base station, a name of the base station, information of tracking area (tracking area, TA) supported by the base station, and a default paging cycle.

For example, in a scenario in which a connection is established between base stations, each base station needs to receive and store configuration information of a peer base station, for example, an identifier of the base station, TA information supported by the base station, information about an AMF entity to which the base station belongs, a cell (including a 4G cell and/or 5G cell) information, and interface entity indication.

For example, in a scenario in which a connection is established between a DU and a CU, the CU needs to receive and store configuration information of the DU sent by the DU, for example, an identifier of the DU, a name of the DU, a list of cells managed by the DU, and an RRC version of the DU. The DU also needs to receive and store configuration information of the CU, for example, a name of the CU, a list of to-be-activated cells, and an RRC version of the CU.
(4) "A plurality of" refers to two or more than two.
(5) The term "and/or" describes an association relationship between associated objects and indicates that three relationships may exist. For example, A and/or B may represent the following three cases: Only A exists, both A and B exist, and only B exists. The character "/" usually indicates an "or" relationship between associated objects.

The following describes in detail the embodiments of this application with reference to accompanying drawings.

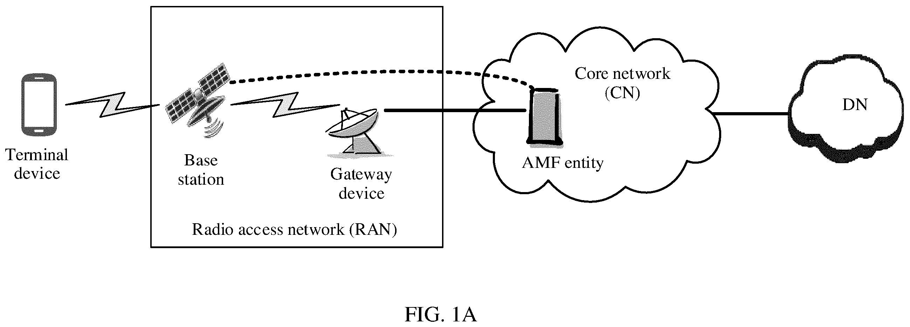

FIG. 1A to FIG. 1E show application scenarios of a communication method according to the embodiments of this application. In the following application scenarios, a communications system mainly includes a terminal device, a radio access network (radio access network, RAN), a core network (core network, CN), and a DN.

The following first describes functions of the above main parts in the communications system.

The terminal device is a device that provides voice and/or data connectivity for a user. The terminal device may also be referred to as user equipment (user equipment, UE), a mobile station (mobile station, MS), a mobile terminal (mobile terminal, MT), or the like.

For example, the terminal device may be a hand-held device or an in-vehicle device that has a wireless connection function. Currently, some examples of the terminal device are: a mobile phone (mobile phone), a tablet computer, a notebook computer, a palmtop computer, a mobile Internet device (mobile internet device, MID), a smart point of sale (point of sale, POS), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety, a wireless terminal in smart city, a wireless terminal in smart home, and various smart meters (such as a smart water meter, a smart electricity meter, and a smart gas meter).

The RAN provides a radio access-related service for the terminal device, and connects the terminal device to the core network. In the RAN, the foregoing functions are implemented by using a base station. The base station is a device that connects the terminal device to a wireless network. As a node in the radio access network, the base station may also be referred to as a network device, or may also be referred to as a radio access network (radio access network, RAN) node (or device).

Currently, some examples of the base station are: a gNB, a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB (HNB)), a baseband unit (baseband unit, BBU), an Enterprise LTE Discrete Spectrum Aggregation (Enterprise LTE Discrete Spectrum Aggregation, eLTE-DSA) base station, and the like.

It should be noted that, in the embodiments of this application, the base station may be an entire device, or may include a plurality of devices having some base station functions.

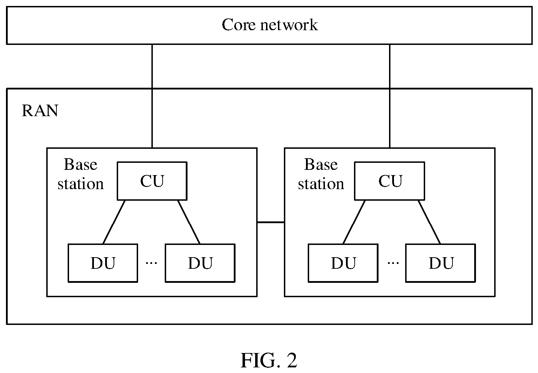

For example, in a network structure, according to logical function division of the base station, the base station may be divided into a CU and at least one DU, as shown in FIG. 2. Optionally, the CU and the DU may be divided based on protocol layers of the wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that processing function division of the CU and the DU based on the protocol layers is merely an example, and there may be other division. For example, the CU or the DU may have functions of more protocol layers through division. For example, the CU or the DU may alternatively have some processing functions of protocol layers through division. In a design, some functions of the RLC layer and functions of a protocol layer above the RLC layer are distributed to the CU, and remaining functions of the RLC layer and functions of a protocol layer below the RLC layer are distributed to the DU. In another design, functions of the CU or the DU may alternatively be divided based on a service type or another system requirement. For example, division is performed based on a latency, functions of which processing time needs to satisfy a latency requirement are deployed on the DU, and functions of which processing time does not need to satisfy the latency requirement are deployed on the CU. One or more CUs may be disposed in a centralized manner or a separated manner. For example, the CUs may be disposed on a network side for ease of centralized management. The DU may have a plurality of radio frequency functions, and the radio frequency functions may be set remotely.

Functions of the CU may be implemented by one entity, or may be implemented by different entities. For example, the functions of the CU may be further divided. For example, a control plane (control panel, CP) is separated from a user plane (user panel, UP), that is, the control plane of the CU (CU-CP) is separated from the user plane of the CU (CU-UP). For example, the CU-CP and the CU-UP may be implemented by different function entities. The CU-CP and the CU-UP may be coupled to the DU to jointly implement functions of the base station.

It should be further noted that, when a function of the base station or some functions of the base station (functions of the DU) are deployed on a satellite, the satellite needs to use a gateway device (for example, a non-terrestrial gateway (NTN-gateway, NTN-GW)) to communicate with the core network or a communications device having other functions of the base station. For example, as shown by dashed lines in FIG. 1A to FIG. 1C-1, a connection between the satellite and an AMF or the DU is actually implemented through a wireless connection between the base station and the gateway device and a connection between the gateway device and the AMF or the DU.

The CN is responsible for connecting the terminal device to different data networks based on a call request or a service request sent by the terminal device through the access network, and is responsible for services such as charging, mobility management, and session management. The CN includes a network element that is responsible for access and has a mobility management function. For example, the network element may be a mobility management entity (mobility management entity, MME), the AMF entity, or the like. In the following embodiments, the AMF entity is used as an example of the network element that is responsible for access and has a mobility management function. When the base station is fixedly set within a management area of the AMF entity or a base station with mobility enters the management area of the AMF entity, the AMF entity needs to establish a connection to the base station, to implement authentication and mobility management on a terminal device that accesses the base station. Optionally, the CN may be an EPC, may be a 5GC, or may be a core network of another type. This is not limited in this application.

The DN performs data transmission with the terminal device through the CN and the RAN, and provides a data communications service for the terminal device, to implement a service of the terminal device. For example, the DN may be Internet (Internet), an IP multi-media service (IP Multi-media Service, IMS) network, a data network dedicated to some applications, or the like. This is not limited in this application.

It should be noted that a type and a standard of the foregoing communications system are not limited in the embodiments of this application. For example, the communications system may be: a fifth generation (5th Generation, 5G) communications system, a Long Term Evolution (Long Term Evolution, LTE) communications system, vehicle to everything (vehicle to everything, V2X), Long Term Evolution-Vehicle (LTE-vehicle, LTE-V), vehicle to vehicle (vehicle to vehicle, V2V), Internet of Vehicles, Machine Type Communications (Machine Type Communications, MTC), an Internet of Things (internet of things, IoT), Long Term Evolution-machine to machine (LTE-machine to machine, LTE-M), machine to machine (machine to machine, M2M), Internet of Things, and the like.

The following respectively describes each application scenario in detail with reference to the accompanying drawings.

For example, refer to the application scenario shown in FIG. 1A, the satellite may serve as the base station to establish an N2 or Ng connection to the AMF entity in the core network, to provide a radio access service for the terminal device.

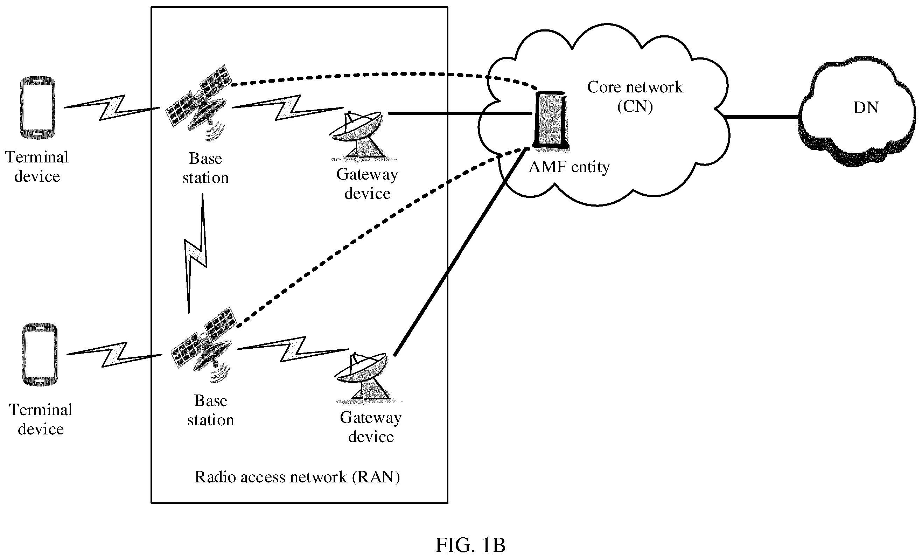

For example, in the communications system, an X2 or Xn connection may be established between two base stations in the RAN, to transmit data such as cell information, so as to implement cell reselection and handover of the terminal device. For example, the two base stations that establish a connection in the RAN may be: satellites serving as base stations, a satellite serving as a base station and a conventional base station, a base station having some functions and a conventional base station, or a base station having some functions and a satellite serving as a base station. In the application scenario shown in FIG. 1B, a connection may be established between two satellites serving as base stations, to exchange data and signaling.

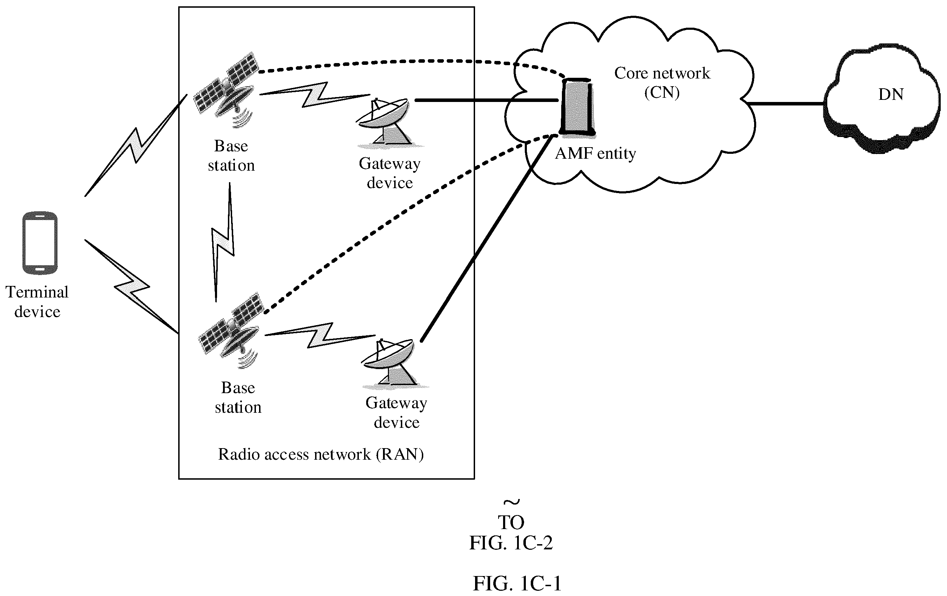

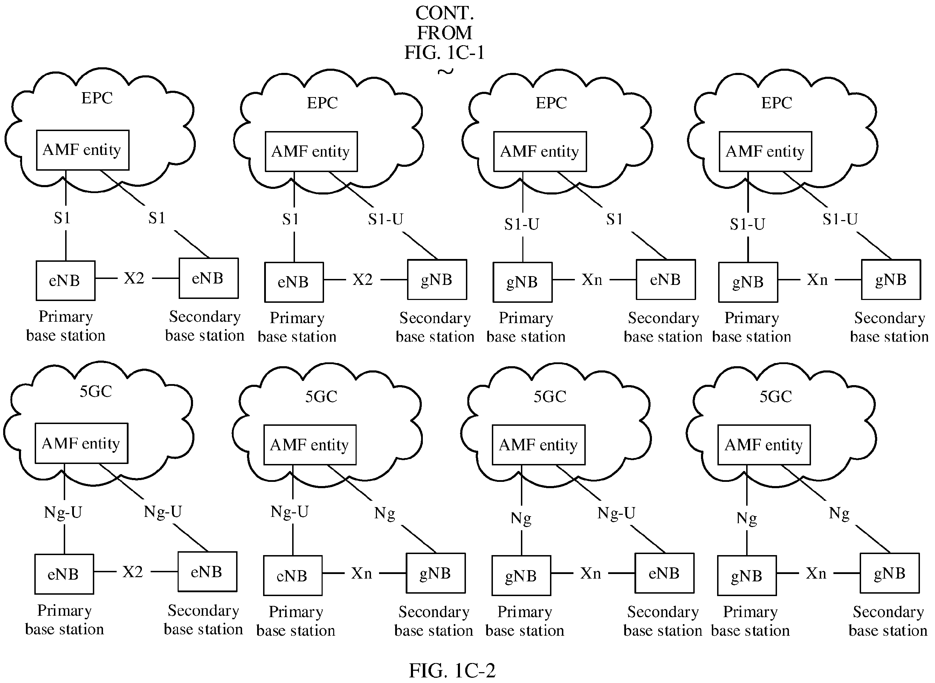

For example, in a communications system that supports carrier aggregation, a dual-connectivity (dual-connectivity, DC) technology may be used for implementation, to provide a higher rate and improve spectral efficiency for a user. In the communications system, a terminal device that supports dual-connectivity may be connected to two base stations simultaneously, to increase a throughput of a single user. A connection needs to be established, through a corresponding interface, between the two base stations simultaneously connected to the terminal device, to exchange data and signaling. Refer to FIG. 1C-1. It should be noted that one of the two base stations simultaneously connected to the terminal device serves as a primary base station, and the other serves as a secondary base station. When core networks connected to the base stations are different and types of the two base stations are different, interfaces between the AMF entity and the base stations and the interface between the two base stations change correspondingly, as shown in a schematic diagram of interfaces in FIG. 1C-2.

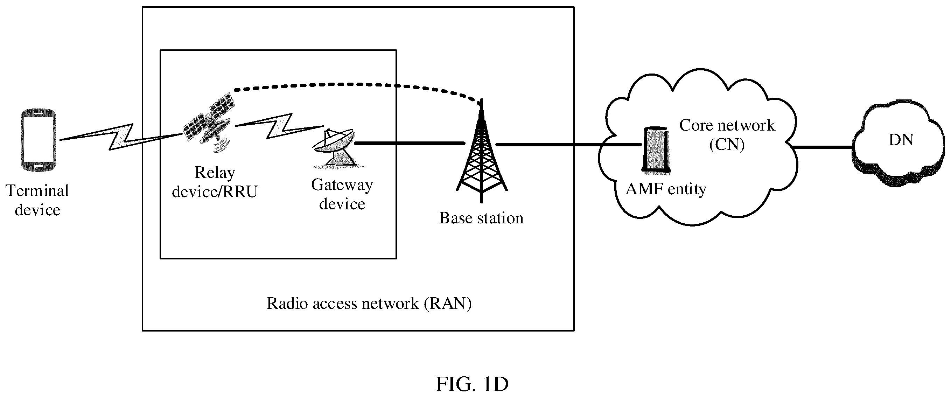

For example, in the application scenario shown in FIG. 1D, the satellite may further serve as a relay device between the terminal device and the base station, or serve as a remote radio unit (remote radio unit, RRU) of the base station. In this scenario, the satellite is mainly responsible for L1 relay for physical layer forwarding and is invisible to an upper layer. An interface between the relay device/RRU and the base station is an X2 interface or an Xn interface.

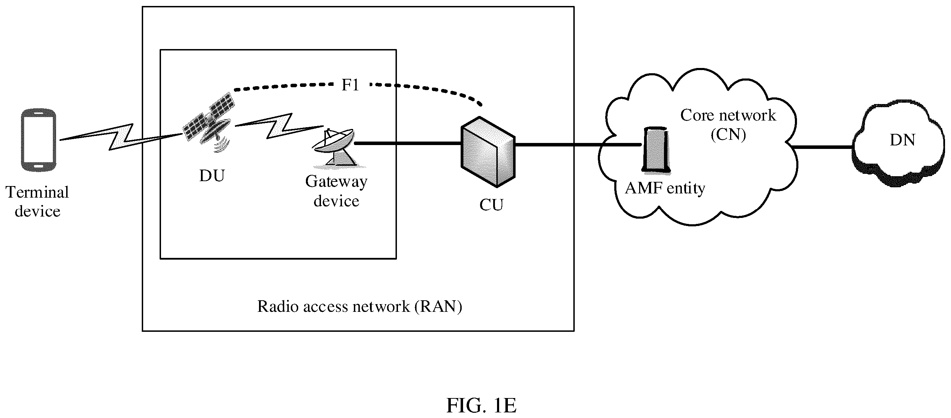

For example, in the application scenario shown in FIG. 1E, the base station in the RAN is split into two functional components: a DU and a CU, and the satellite may be used as the DU. In this application scenario, an interface between the DU and the CU is an F1 interface.

It should be further noted that the application scenarios shown in FIG. 1A to FIG. 1E are merely examples of application scenarios applicable to this application, and the communications device that needs to establish connections for a plurality of times in the foregoing examples is described by using only the satellite as an example. The method provided in the embodiments of this application is applicable to any application scenario and communications system that have a plurality of connection establishment requirements, and the communications device having the plurality of connection establishment requirements can be a device in various forms.

In the application scenarios shown in FIG. 1A to FIG. 1E, because the satellite usually moves at a high speed relative to the ground along a preset orbit, as the satellite moves, to ensure service continuity of the terminal device, the satellite needs to frequently establish a connection to another communications device. The another communications device may be an AMF entity in the core network, or a base station (including a conventional base station or a satellite) or a CU in the access network. For example, after duration T1 in which the satellite and a communications device a is connected, the satellite disconnects from the communications device a and establishes a connection to a communications device b. After duration T2, the satellite reaches the vicinity of the communications device a again, and reestablishes the connection to the communications device a. Values of T1 and T2 may be specifically set based on an actual application. For example, T1 may be 5 minutes (minutes, m), 10 m, 20 m, or the like. T2 may be 24 hours (hours, h), 28 hours, 30 hours, or the like. If each time the satellite establishes the connection to the another communications device according to a conventional connection establishment method, the satellite needs to transmit configuration information of the communications device through a plurality of signaling exchanges. This causes high signaling overheads of the satellite, and also causes high power consumption of the satellite.

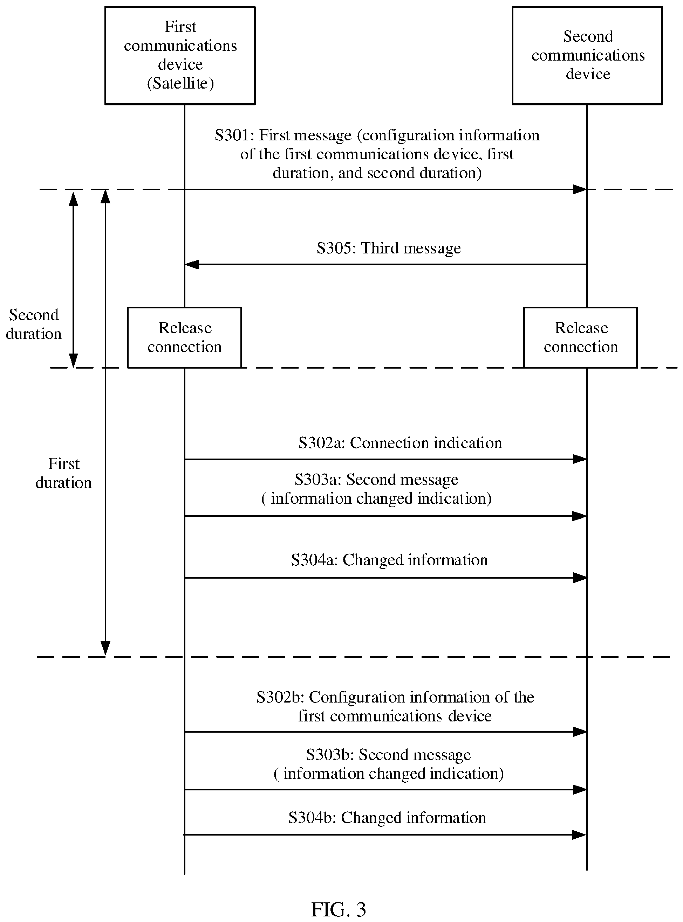

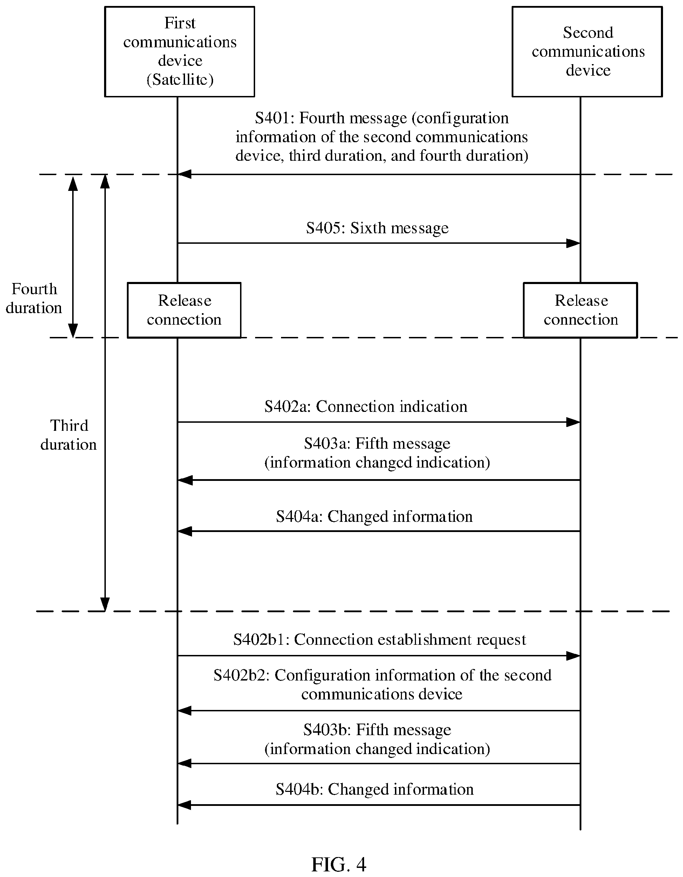

To reduce signaling overheads of the communications device having the plurality of connection establishment requirements in the communications system, some embodiments of this application provide a communication method, as shown in FIG. 3 and FIG. 4. The method is applicable to the application scenarios shown in FIG. 1A to FIG. 1E. In the method, the communications device having the plurality of connection establishment requirements is referred to as a first communications device, and a peer communications device that establishes a connection to the first communications device is referred to as a second communications device. In the embodiments shown in FIG. 3 and FIG. 4, an example in which the first communications device is a satellite is used to describe the method. The second communications device is a communications device such as the AMF entity, the base station, or the CU that needs to connect to the satellite in the foregoing application scenarios. In a specific application scenario, the method shown in FIG. 3, or the method shown in FIG. 4, or both the methods shown in FIG. 3 and FIG. 4 may be implemented.

The following describes the communication method provided in an embodiment of this application with reference to a flowchart shown in FIG. 3.

S301: The first communications device generates a first message, and sends the first message to the second communications device; and the second communications device receives the first message from the first communications device. The first message indicates configuration information of the first communications device and first duration, and the first duration is duration in which the second communications device stores the configuration information of the first communications device.

Optionally, the first communications device sends the first message to the second communications device in a process of establishing a connection between the first communications device and the second communications device or after establishing the connection.

Optionally, the first communications device and the second communications device may establish the current connection by following a conventional connection establishment procedure.

It should be noted that a quantity of first messages is not limited in the embodiments of this application. The first message may be one message, or may include a plurality of messages. For example, the first message includes the configuration information of the first communications device and the first duration; or the first communications device sends a plurality of first messages, where a first message a includes the configuration information of the first communications device, and a first message b includes the first duration. In addition, when the first message includes the plurality of messages, a sending sequence of the plurality of messages is not limited in the embodiments of this application. To be specific, the first message a and the first message b may be sent simultaneously, or the first communications device may first send the first message a and then send the first message b, or the first communications device may first send the first message b and then send the first message a.

In an implementation, the first message may be carried in existing signaling, for example, carried in a connection establishment request sent by the first communications device to the second communications device. The first message may also be a new message.

In some embodiments, after receiving the first message including the first duration, the second communications device stores the configuration information of the first communications device in the first duration. In an implementation, the second communications device continuously determines whether time elapsed since the receiving the first message from the first communications device until a current moment is less than the first duration. If yes, the second communications device continues to store the configuration information of the first communications device. Otherwise, the second communications device deletes the configuration information of the first communications device.

For example, after receiving the first message including the first duration, the second communications device starts a timer, and a value of the timer is initialized to the first duration or 0. The second communications device determines, by determining the value of the timer at the current moment, whether the time elapsed since the receiving the first message from the first communications device until the current moment is less than the first duration. When the value of the timer is not equal to 0 or the first duration, the second communications device determines that the time elapsed since the receiving the first message from the first communications device until the current moment is less than the first duration. When the value of the timer is equal to 0 or the first duration, the second communications device determines that the time elapsed since the receiving the first message from the first communications device until the current moment reaches the first duration.

It should be noted that a value of the first duration may be specifically set based on an actual application scenario. For example, the first duration may be 1h, 5h, 24h, 30h, 36h, or the like. In an implementation, the value of the first duration may refer to a time difference between two consecutive connections established by the first communications device to the second communications device, or refer to a time difference between two consecutive moves of the first communications device in the vicinity of the second communications device. For example, when the first communications device is the satellite, the satellite may determine the time difference between the two consecutive moves in the vicinity of the second communications device based on a preset satellite orbit map.

In a process of reestablishing a connection between the first communications device and the second communications device (for example, when the satellite moves again in the vicinity of the second communications device), the first communications device also needs to determine whether time elapsed since the sending first message to the second communications device until the current moment is less than the first duration. If yes, perform S302a. If no, perform S302b. Optionally, similar to the second communications device, the first communications device may also determine, by using a timer, whether the time elapsed since the sending the first message to the second communications device until the current moment is less than the first duration. For specific description, refer to the description of the second communications device. Details are not described herein again.

S302a: In the process of reestablishing the connection between the first communications device and the second communications device, the first communications device determines that the time elapsed since the sending the first message to the second communications device until the current moment is less than the first duration (that is, determines that the second communications device still stores the configuration information of the first communications device), and in this case, the first communications device sends a connection indication to the second communications device. The connection indication is used to notify the second communications device to restore the connection to the first communications device based on the stored configuration information of the first communications device. Correspondingly, when receiving the connection indication from the first communications device, the second communications device restores the connection to the first communications device based on the stored configuration information of the first communications device.

In this step, the first communications device may not resend the configuration information of the first communications device to the second communications device in the process of reestablishing the connection to the second communications device. This reduces signaling overheads of the first communications device in the connection establishment process, and power consumption and electricity consumption of the first communications device are reduced.

S302b: In the process of reestablishing the connection between the first communications device and the second communications device, the first communications device determines that the time elapsed since the sending the first message to the second communications device until the current moment reaches the first duration (that is, determines that the second communications device has deleted the configuration information of the first communications device); and in this case, the first communications device resends the configuration information of the first communications device to the second communications device, to establish the connection to the second communications device based on the configuration information of the first communications device.

In an implementation, the first communications device may reestablish the connection to the second communications device by following the conventional connection establishment procedure. For example, the first communications device may use the connection establishment request to carry the configuration information of the first communications device, and send the connection establishment request to the second communications device.

In an implementation, the first communications device may resend the configuration information of the first communications device to the second communications device by following a conventional communications device configuration information update procedure.

In the embodiments of this application, the first communications device and the second communications device may release the connection by following a conventional connection release procedure. Alternatively, the connection is released in the following implementation manner, to further reduce signaling overheads of the two communications devices caused by following the conventional connection release process. In the conventional connection release process, the first communications device needs to send a connection release request to the second communications device, and the second communications device needs to return a connection release response to the first communications device.

According to the invention, the first message further includes second duration, and the second duration is duration in which the first communications device maintains a current connection to the second communications device.

In this way, after the first communications device sends the first message to the second communications device, when the first communications device determines that time elapsed since sending the second duration to the second communications device until the current moment exceeds the second duration, the first communications device releases the connection between the first communications device and the second communications device, as shown in FIG. 3.

Similarly, after the second communications device receives the first message from the first communications device, when the second communications device determines that time elapsed since receiving second duration from the first communications device until the current moment exceeds the second duration, the second communications device releases the connection between the first communications device and the second communications device, as shown in FIG. 3.

For example, the first communications device may determine, by using the timer, whether the time elapsed since the sending second duration to the second communications device until the current moment exceeds the second duration. The second communications device may determine, also by using the timer, whether the time elapsed since the receiving the second duration from the first communications device until the current moment exceeds the second duration.

It should be noted that a value of the second duration may be specifically set based on an actual application scenario. For example, the second duration may be 2m, 4m, 5m, 10m or the like.

Optionally, the first duration and the second duration are not limited to the current connection, and may be repeatedly used. For example, each time after receiving the configuration information of the first communications device, the second communications device stores the configuration information in the first duration, and deletes the configuration information after reaching the first duration. For another example, each time the established connection between the second communications device and the first communications device is maintained in the second duration, and the connection is released after the second duration.

For various reasons in an actual application, the first communications device may change any one of or a combination of the following information at any time: the configuration information of the first communications device, the first duration, and the second duration. Therefore, in the process of reestablishing the connection to the second communications device, the first communications device may notify, in the following implementation manner, the second communications device whether the foregoing information changes. The process of reestablishing the connection between the first communications device and the second communications device includes two scenarios: S302a and S302b. Correspondingly, in the scenario of S302a, the first communications device may notify the second communications device of changed information through S303a and S304a. In the scenario of S302b, the first communications device may notify the second communications device of the changed information through S303b and S304b.

S303a: When time elapsed since the sending the first message to the second communications device until the first communications device reestablishes the connection to the second communications device is less than the first duration, the first communications device sends a second message to the second communications device. The second message includes an information changed indication, and the information changed indication is used to notify the second communications device that any one of or a combination of the following information changes: the configuration information of the first communications device, the first duration, and the second duration. The second communications device receives the second message from the first communications device.

Optionally, when the foregoing information does not change, the first communications device may further send the second message carrying an information unchanged indication to the second communications device, to notify the second communications device that the foregoing information does not change.

It should be noted that an execution sequence of S303a and S302a is not limited in this application. Both can be executed simultaneously (For example, both the connection indication and the information changed indication/information unchanged indication are included in the second message), or S302a is performed first, or S303a is performed first.

S304a: When the foregoing information changes, the first communications device sends the changed information to the second communications device. The second communications device receives the changed information from the first communications device.

In this way, the second communications device may restore the connection to the first communications device based on changed configuration information of the first communications device; or the second communications device may continue to store the configuration information of the first communications device based on a changed first duration; or the second communications device may maintain and release the current established connection based on a changed second duration.

S303b: When time elapsed since the sending the first message to the second communications device until the first communications device reestablishes the connection to the second communications device reaches the first duration, the first communications device sends a second message to the second communications device. The second message includes an information changed indication, and the information changed indication is used to notify the second communications device that any one of or a combination of the following information changes: the first duration and the second duration. The second communications device receives the second message from the first communications device.

Optionally, when the foregoing information does not change, the first communications device may further send the second message carrying an information unchanged indication to the second communications device, to notify the second communications device that the foregoing information does not change.

It should be noted that an execution sequence of S303b and S302b is not limited in this application. Both can be executed simultaneously (For example, both the configuration information of the first communications device and the information changed indication/information unchanged indication are included in the second message), or S302b is performed first, or S303b is performed first.

S304b: When the foregoing information changes, the first communications device sends the changed information to the second communications device. The second communications device receives the changed information from the first communications device.

In this way, the second communications device may continue to store the configuration information of the first communications device based on a changed first duration; or the second communications device may maintain and release the current established connection based on a changed second duration.

In an implementation, the first message may further include: an identifier of the first communications device and/or a moment that is estimated by the first communications device and at which the connection is reestablished between the first communications device and the second communications device. For example, when the first communications device is the satellite, the satellite may estimate, based on the preset satellite orbit map (or referred to as a satellite track map), a moment at which the satellite moves in the vicinity of the second communications device again (that is, the moment at which the first communications device reestablishes the connection to the second communications device).

In the embodiments of this application, after receiving the first message and saving the configuration information of the first communications device and the first duration, the second communications device may further notify the first communications device in the following steps.

S305: The second communications device stores the configuration information of the first communications device and the first duration, and sends a third message to the first communications device, where the third message is used to notify the first communications device that the second communications device has stored the configuration information of the first communications device and the first duration.

In the communication method provided in the embodiments of this application, in the process of establishing the connection between the first communications device having the plurality of connection establishment requirements and the second communications device or after establishing the connection, the first communications device sends the first duration to the second communications device, to indicate the duration in which the second communications device stores the configuration information of the first communications device. In this way, in the process of reestablishing the connection between the first communications device and the second communications device, the second communications device stores the configuration information of the first communications device based on the first duration. In this case, the first communications device does not need to resend the configuration information of the first communications device to the second communications device, and the second communications device may restore the connection to the first communications device based on the stored configuration information of the first communications device. Therefore, this method can reduce the signaling overheads of the first communications device sending the configuration information of the first communications device in the connection establishment process, and reduce power consumption and electricity consumption of the first communications device.

The following describes the communication method provided in an embodiment of this application with reference to a flowchart shown in FIG. 4.

S401: A second communications device generates a fourth message, and sends the fourth message to a first communications device; and the first communications device receives the fourth message from the second communications device. The fourth message indicates configuration information of the second communications device and third duration, and the third duration is duration in which the first communications device stores the configuration information of the second communications device.

Optionally, the second communications device may send the fourth message to the first communications device in a process of establishing a connection to the first communications device or after establishing the connection.

Optionally, the first communications device and the second communications device may establish the current connection by following a conventional connection establishment procedure.

Similar to the first message in the foregoing embodiment, a quantity of fourth messages is not limited in the embodiments of this application. The fourth message may be one message, or may include a plurality of messages. For example, the fourth message includes the configuration information of the second communications device and the third duration; or the second communications device sends a plurality of fourth messages, where a fourth message a includes the configuration information of the second communications device, and a fourth message b includes the third duration. In addition, when the fourth message includes the plurality of messages, a sending sequence of the plurality of messages is not limited in the embodiments of this application.

In an implementation, the fourth message may be carried in existing signaling, for example, carried in a connection establishment response sent by the second communications device to the first communications device. The fourth message may also be a new message.

In some embodiments, after receiving the fourth message including the third duration, the first communications device stores the configuration information of the second communications device in the first duration. In an implementation, the first communications device continuously determines whether time elapsed since the receiving the fourth message from the second communications device until a current moment is less than the third duration. If yes, the first communications device continues to store the configuration information of the second communications device. Otherwise, the first communications device deletes the configuration information of the second communications device.

For example, the first communications device may determine, by using a timer, whether the time elapsed since the receiving the fourth message from the second communications device until the current moment is less than the third duration.

It should be noted that a value of the third duration may be specifically set based on an actual application scenario. For example, the third duration may be 24h, 30h, 36h, or the like. In an implementation, the value of the third duration may refer to a time difference between two consecutive connections established by the second communications device to the first communications device, or refer to a time difference between two consecutive moves of the first communications device in the vicinity of the second communications device. For example, when the first communications device is a satellite, the second communications device may store locally a satellite orbit map of the satellite to determine the time difference between the two consecutive moves in the vicinity of the second communications device.

In a process of reestablishing a connection between the first communications device and the second communications device (for example, when the satellite moves again in the vicinity of the second communications device), the first communications device also needs to determine whether the time elapsed since the receiving the fourth message from the second communications device until the current moment is less than the third duration. If yes, perform S402a; otherwise, perform S402b1 and S402b2.

Optionally, similar to the first communications device, the second communications device may also determine, by using a timer, whether the time elapsed since the sending the fourth message to the first communications device until the current moment is less than the third duration. For specific description, refer to the description of the first communications device. Details are not described herein again.

S402a: In the process of reestablishing the connection between the first communications device and the second communications device, the first communications device determines that the time elapsed since the receiving the fourth message from the second communications device until the current moment is less than the third duration (that is, determines that the configuration information of the second communications device is still stored locally), and in this case, the first communications device sends a connection indication to the second communications device, and restores the connection to the second communications device based on the locally stored configuration information of the second communications device. The connection indication is used to notify the second communications device to restore the connection to the first communications device. Correspondingly, when receiving the connection indication from the first communications device, the second communications device restores the connection to the

In this step, the first communications device may not receive the configuration information of the second communications device from the second communications device in the process of reestablishing the connection to the second communications device. This reduces signaling overheads and power consumption of the second communications device in the connection establishment process, and also reduces overheads and power consumption of the first communications device receiving the signaling.

S402b1: In the process of reestablishing the connection between the first communications device and the second communications device, the first communications device determines that the time elapsed since the receiving the fourth message from the second communications device until the current moment reaches the third duration (that is, determines that the configuration information of the second communications device is deleted locally), and in this case, the first communications device sends a connection establishment request to the second communications device, to request the second communications device to resend the configuration information of the second communications device.

Optionally, the first communications device may request the second communications device to resend the configuration information of the second communications device by following a conventional communications device configuration information update procedure.

S402b2: After receiving the connection establishment request from the first communications device, the second communications device resends the configuration information of the second communications device to the first communications device. In this way, after receiving the configuration information of the second communications device, the first communications device establishes the connection to the second communications device based on the configuration information of the second communications device.

In the embodiments of this application, the first communications device and the second communications device may release the connection by following a conventional connection release procedure. Alternatively, the connection is released in the following implementation manner, to further reduce signaling overheads of the two communications devices caused by following the conventional connection release process.

According to the invention, the fourth message further includes fourth duration, and the fourth duration is duration in which the second communications device maintains a current connection to the first communications device.

In this way, after the second communications device sends the fourth message to the first communications device, when the second communications device determines that time elapsed since sending the fourth duration to the first communications device until the current moment exceeds the fourth duration, the second communications device releases the connection established by the second communications device to the first communications device, as shown in FIG. 4.

Similarly, after the first communications device receives the fourth message from the second communications device, when the first communications device determines that time elapsed since receiving the fourth duration from the second communications device until the current moment exceeds the fourth duration, the first communications device releases the connection established by the first communications device to the second communications device, as shown in FIG. 4.

For example, the second communications device may determine, by using the timer, whether the time elapsed since the sending the fourth duration to the first communications device until the current moment exceeds the fourth duration. The first communications device may determine, also by using the timer, whether the time elapsed since the receiving the fourth duration from the second communications device until the current moment exceeds the fourth duration.

It should be noted that a value of the fourth duration may be specifically set based on an actual application scenario. For example, the fourth duration may be 2m, 4m, 5m, 10m or the like.

Optionally, the third duration and the fourth duration is not limited to the current connection, and the two durations may be repeatedly used. For example, each time after receiving the configuration information of the second communications device, the first communications device stores the configuration information in the third duration, and deletes the configuration information after reaching the third duration. For another example, each time the connection established by the first communications device to the second communications device is maintained in the fourth duration, and the connection is released after the fourth duration.

For various reasons in an actual application, the second communications device may change any one of or a combination of the following information at any time: the configuration information of the second communications device, the third duration, and the fourth duration. Therefore, in the process of reestablishing the connection to the first communications device, the second communications device may notify, in the following implementation manner, the first communications device whether the foregoing information changes. The process of reestablishing the connection between the second communications device and the first communications device includes two scenarios (one scenario is S402a; the other scenario is S402b1 and S402b2). Correspondingly, in the scenario of S402a, the second communications device may notify the first communications device of changed information through S403a and S404a. In the scenario of S402b1 and S402b2, the second communications device may notify the second communications device of the changed information through S403b and S404b.

S403a: When time elapsed since the sending the fourth message to the first communications device until the second communications device and the first communications device reestablish the connection is less than the third duration, the second communications device sends a fifth message to the first communications device. The fifth message includes an information changed indication, and the information changed indication is used to notify the first communications device that any one of or a combination of the following information changes: the configuration information of the second communications device, the third duration, and the fourth duration. The first communications device receives the fifth message from the second communications device.

Optionally, when the foregoing information does not change, the second communications device may further send the fifth message carrying an information unchanged indication to the first communications device, to notify the first communications device that the foregoing information does not change.

S404a: When the foregoing information changes, the second communications device sends the changed information to the first communications device. The first communications device receives the changed information from the second communications device.

In this way, the first communications device may restore the connection to the second communications device based on changed configuration information of the second communications device; or the first communications device may continue to store the configuration information of the second communications device based on a changed third duration; or the first communications device may maintain and release the current established connection based on changed second duration.

S403b: When time elapsed since the sending the fourth message to the first communications device until the second communications device and the first communications device reestablish the connection reaches the third duration, the second communications device sends a fifth message to the first communications device. The fifth message includes an information changed indication, and the information changed indication is used to notify the first communications device that any one of or a combination of the following information changes: the third duration and the fourth duration. The first communications device receives the fifth message from the second communications device.

Optionally, when the foregoing information does not change, the second communications device may further send the fifth message carrying an information unchanged indication to the first communications device, to notify the first communications device that the foregoing information does not change.

It should be noted that an execution sequence of S403b and S402b2 is not limited in this application. The two may be performed simultaneously, or S403b is performed first, or S402b2 is performed first.

S404b: When the foregoing information changes, the second communications device sends the changed information to the first communications device. The first communications device receives the changed information from the second communications device.

In this way, the first communications device may continue to store the configuration information of the second communications device based on changed first duration; or the first communications device may maintain and release the current established connection based on changed second duration.

In an implementation, the fourth message may further include: an identifier of the second communications device and/or a moment that is estimated by the second communications device and at which the connection is reestablished between the first communications device and the second communications device. For example, when the first communications device is the satellite, the second communications device may estimate, based on the locally stored satellite orbit map (or referred to as a satellite track map), a moment at which the satellite moves in the vicinity of the second communications device again (that is, the moment at which the first communications device reestablishes the connection to the second communications device).

In the embodiments of this application, after receiving the fourth message and saving the configuration information of the second communications device and the third duration, the first communications device may further notify the second communications device in the following steps.

S405: The first communications device stores the configuration information of the second communications device and the first duration, and sends a sixth message to the second communications device, where the sixth message is used to notify the second communications device that the first communications device has stored the configuration information of the second communications device and the third duration.

In the communication method provided in the embodiments of this application, in the process of establishing the connection between the second communications device and the first communications device having a plurality of connection establishment requirements or after establishing the connection, the second communications device sends the third duration to the first communications device, to indicate the duration in which the first communications device stores the configuration information of the second communications device. In this way, in the process of reestablishing the connection between the first communications device and the second communications device, the first communications device stores the configuration information of the first communications device based on the third duration. In this case, the first communications device does not need to receive again the configuration information of the second communications device from the second communications device, and the first communications device may restore the connection to the second communications device based on the stored configuration information of the second communications device. Therefore, this method can reduce the signaling overheads and the power consumption of the second communications device sending the configuration information of the second communications device in the connection establishment process, and also reduce the overheads and the power consumption of the first communications device receiving the signaling.

It should be further noted that, based on a specific requirement of an application scenario, a communications system may implement the method shown in FIG. 3, or the method shown in FIG. 4, or both the methods shown in FIG. 3 and FIG. 4 may be implemented. This is not limited in the embodiments of this application. When both the methods shown in FIG. 3 and FIG. 4 are implemented in the communications system, because the second duration and the fourth duration have a same function and are both the durations in which the connection is maintained, one of the second duration and the fourth duration may be reserved. In addition, the values of the first duration and the second duration may be the same or different. This is not limited in this application.

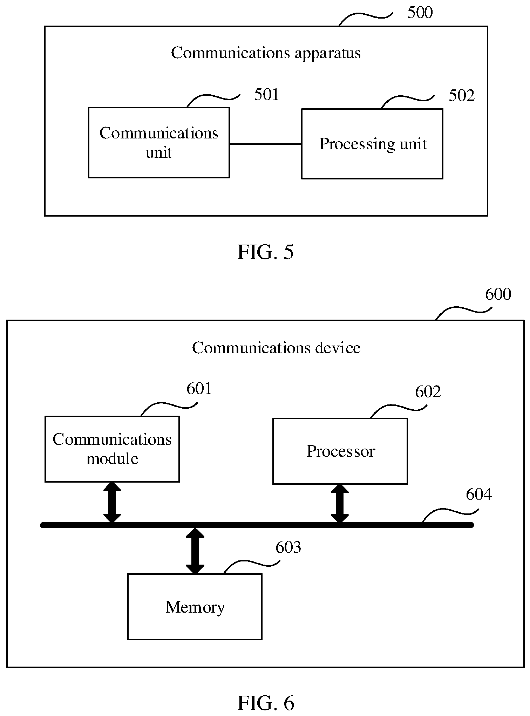

Based on a same technical concept, an embodiment of this application further provides a communications apparatus. A structure of the apparatus is shown in FIG. 5, and the apparatus includes a communications unit 501 and a processing unit 502. The communications apparatus is applied to a communications device, and the communications device is applicable to a communications system having a plurality of connection establishment requirements, for example, systems in application scenarios shown in FIG. 1A to FIG. 1E, and can implement the communication method shown in FIG. 3 and FIG. 4.

A function of the communications unit 501 is to receive and send data.

In an implementation, when the communications device is a device having a wireless communications function, for example, when the communications device is a device such as a base station, a DU, or a relay device/RRU, the communications unit 501 may be implemented by using a mobile communications module and/or a wireless communications module, and an antenna. The mobile communications module may provide a solution that is applied to an electronic device and that is for wireless communications such as 2G, 3G, 4G, and 5G. The mobile communications module 150 may include at least one filter, a switch, a power amplifier, a low noise amplifier (low noise amplifier, LNA), and the like. The wireless communications module may provide a solution that is applied to the electronic device and that is for wireless communications including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In another implementation, when the communications device is a device having a wired communications function, for example, when the communications device is a device such as a CU and an AMF entity, the communications unit 501 may be implemented by using a communications interface.

The following describes functions of the processing unit when the communications apparatus 500 is applied to a first communications device.

The processing unit 502 is configured to generate a first message, and send the first message to a second communications device by using the communications unit 501.

The first message indicates configuration information of the first communications device and first duration, and the first duration is duration in which the second communications device stores the configuration information of the first communications device.

In an implementation, the processing unit 502 is further configured to:
after sending the first message to the second communications device by using the communications unit 501, in a process of reestablishing a connection between the first communications device and the second communications device, determine whether time elapsed since the sending the first message to the second communications device until a current moment is less than the first duration; and
if yes, send a connection indication to the second communications device by using the communications unit 501, where the connection indication is used to notify the second communications device to restore the connection to the first communications device based on the stored configuration information of the first communications device; or
if no, resend the configuration information of the first communications device to the second communications device by using the communications unit 501, and establish the connection to the second communications device based on the configuration information of the first communications device.

According to the invention, the first message further includes second duration, and the second duration is duration in which the first communications device maintains a current connection to the second communications device.

In an implementation, the processing unit 502 is further configured to:
after sending the first message to the second communications device by using the communications unit 501, when time elapsed since sending the second duration to the second communications device until the current moment is determined to exceed the second duration, release the connection between the first communications device and the second communications device.

In an implementation, the processing unit 502 is further configured to:
after sending the first message to the second communications device by using the communications unit 501, in the process of reestablishing the connection between the first communications device and the second communications device, send a second message to the second communications device by using the communications unit 501.

The second message includes an information changed indication, and the information changed indication is used to notify the second communications device that any one of or a combination of the following information changes: the configuration information of the first communications device, the first duration, and the second duration.

In an implementation, the processing unit 502 is further configured to:
after sending the second message to the second communications device by using the communications unit 501, send changed information to the second communications device by using the communications unit 501.

In an implementation, the first message may further include: an identifier of the first communications device and/or a moment that is estimated by the processing unit 502 and at which the connection is reestablished between the first communications device and the second communications device.

In an implementation, the processing unit 502 is further configured to:
after sending the first message to the second communications device by using the communications unit 501, receive a third message from the second communications device by using the communications unit 501, where the third message is used to notify the first communications device that the second communications device has stored the configuration information of the first communications device and the first duration.

The following describes functions of the processing unit 502 when the communications apparatus 500 is applied to the second communications device.

The processing unit 502 is configured to receive a first message from the first communications device by using the communications unit 501.

The first message indicates configuration information of the first communications device and first duration, and the first duration is duration in which the second communications device stores the configuration information of the first communications device.

In an implementation, the processing unit 502 is further configured to:
after receiving the first message from the first communications device by using the communications unit 501, determine whether time elapsed since the receiving the first message from the first communications device until a current moment is less than the first duration; and
if yes, continue to store the configuration information of the first communications device; and in a process of reestablishing a connection between the second communications device and the first communications device, when a connection indication is received from the first communications device by using the communications unit 501, restore the connection to the first communications device based on the stored configuration information of the first communications device; or
if no, delete the configuration information of the first communications device; and in a process of reestablishing a connection between the second communications device and the first communications device, receive again the configuration information of the first communications device from the first communications device by using the communications unit 501, and establish the connection to the first communications device based on the configuration information of the first communications device.

In an implementation, the first message further includes second duration, and the second duration is duration in which the first communications device maintains a current connection to the second communications device.

In an implementation, the processing unit 502 is further configured to:
after receiving the first message from the first communications device by using the communications unit 501, when time elapsed since receiving the second duration from the first communications device until the current moment is determined to exceed the second duration, release the connection between the first communications device and the second communications device.

In an implementation, the processing unit 502 is further configured to:
after receiving the first message from the first communications device by using the communications unit 501, in the process of reestablishing the connection between the second communications device and the first communications device, receive a second message from the first communications device by using the communications unit 501.

The second message includes an information changed indication, and the information changed indication is used to notify the second communications device that any one of or a combination of the following information changes: the configuration information of the first communications device, the first duration, and the second duration.

In an implementation, the processing unit 502 is further configured to:
after receiving the second message from the first communications device by using the communications unit 501, receive changed information from the first communications device by using the communications unit 501.

In an implementation, the first message may further include: an identifier of the first communications device and/or a moment that is estimated by the first communications device and at which the connection is established between the first communications device and the second communications device.

In an implementation, the processing unit 502 is further configured to:
after receiving the first message from the first communications device by using the communications unit 501, store the configuration information of the first communications device and the first duration, and send a third message to the first communications device by using the communications unit 501, where the third message is used to notify the first communications device that the second communications device has stored the configuration information of the first communications device and the first duration.

It should be noted that, in the embodiments of this application, division into the modules is an example and is merely logical function division, and may be other division during actual implementation. In addition, function units in the embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application further provides a communications device. The communications device is applicable to the communications system having the plurality of connection establishment requirements, for example, the systems in application scenarios shown in FIG. 1A to FIG. 1E, and can implement the communication method shown in FIG. 3 and FIG. 4. Refer to FIG. 6. The communications device 600 includes: a communications module 601, a processor 602, and a memory 603. The communications module 601 and the memory 603 are separately connected to the processor 602.

Optionally, the communications module 601 and the memory 603 are connected to the processor 602 through a bus 604. The bus 604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 6, but this does not mean that there is only one bus or only one type of bus.

The communications module 601 is configured to receive and send data to implement communications with another device in the communications system. The communications module 601 may be a transceiver or a communications interface. The transceiver may be implemented by a mobile communications module and/or a wireless communications module and an antenna. The mobile communications module may provide a solution that is applied to an electronic device and that is for wireless communications such as 2G, 3G, 4G, and 5G. The wireless communications module may provide a solution that is applied to the electronic device and that is for wireless communications including WLAN, Wi-Fi, BT, GNSS, FM, NFC, IR, and the like.

The processor 602 is configured to perform the communication methods in the foregoing figures. For details, refer to the descriptions in the foregoing embodiments. Details are not described herein again.

The memory 603 is configured to store program instructions and the like. Specifically, the program instructions may include program code, and the program code includes computer operation instructions. The memory 603 may include a random access memory (random access memory, RAM), or may further include a non-volatile memory (non-volatile memory), for example, at least one disk memory. The processor 602 executes the program instructions stored in the memory 603, to implement the foregoing functions, so as to implement the communication method provided in the foregoing embodiments.

According to the foregoing embodiments, an embodiment of this application further provides a communications system, including a first communications device and a second communications device. The first communications device has a function of the first communications device in the communication method shown in FIG. 3 or FIG. 4. The second communications device has a function of the second communications device in the communication method shown in FIG. 3 or FIG. 4.

According to the foregoing embodiments, an embodiment of this application further provides a computer program. When the computer program is run on a computer, the computer is enabled to perform the communication method provided in the foregoing embodiments.

According to the foregoing embodiments, an embodiment of this application further provides a computer storage medium. The computer storage medium stores a computer program. When the computer program is executed by a computer, the computer is enabled to perform the communication method provided in the foregoing embodiments.

According to the foregoing embodiments, an embodiment of this application further provides a chip. The chip is configured to read a computer program stored in a memory, to implement the communication method provided in the foregoing embodiments.

According to the foregoing embodiments, an embodiment of this application provides a chip system. The chip system includes a processor, configured to support a computer apparatus in implementing the functions related to the communications device or the network device in the foregoing embodiments. In a possible design, the chip system further includes a memory, and the memory is configured to store a program and data that are necessary for the computer apparatus. The chip system may include a chip, or may include a chip and another discrete component.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

## Claims

1. A communication method, comprising:
generating (S301), by a first communications device, a first message; and
sending (S301), by the first communications device, the first message to a second communications device, wherein
the first message indicates configuration information of the first communications device and first duration, and the first duration is duration in which the second communications device stores the configuration information of the first communications device,
wherein the first message further comprises second duration, and the second duration is duration in which the first communications device maintains a current connection to the second communications device,
wherein the first communications device is a base station, and the second communications device is an access and management function, AMF, entity, or a base station; or
the first communications device is a relay device between a terminal device and a base station, or serves as a remote radio unit, RRU, of a base station, and the second communications device is the base station; or
the first communications device is a distributed unit, DU, and the second communications device is a centralized unit, CU.

2. The method according to claim 1, wherein after the sending, by the first communications device, the first message to a second communications device, the method further comprises:
in a process of reestablishing a connection between the first communications device and the second communications device, determining, by the first communications device, whether time elapsed since the sending the first message to the second communications device until a current moment is less than the first duration; and
if the time elapsed since the sending the first message to the second communications device until the current moment is less than the first duration, sending (S302a), by the first communications device, a connection indication to the second communications device, wherein the connection indication is used to notify the second communications device to restore the connection to the first communications device based on the stored configuration information of the first communications device; or
if the time elapsed since the sending the first message to the second communications device until the current moment is not less than the first duration, resending (S302b), by the first communications device, the configuration information of the first communications device to the second communications device, and establishing the connection to the second communications device based on the configuration information of the first communications device.

3. The method according to claim 1, wherein after the sending, by the first communications device, the first message to a second communications device, the method further comprises:
when the first communications device determines that time elapsed since sending the second duration to the second communications device until the current moment exceeds the second duration, releasing, by the first communications device, the connection between the first communications device and the second communications device.

4. The method according to any of claims 1-3, wherein after the sending, by the first communications device, the first message to a second communications device, the method further comprises:
in the process of reestablishing the connection between the first communications device and the second communications device, sending (303a, 303b), by the first communications device, a second message to the second communications device, wherein
the second message includes an information changed indication, and the information changed indication is used to notify the second communications device that any one of or a combination of the following information changes: the configuration information of the first communications device, the first duration, and the second duration.

5. The method according to claim 4, wherein after the sending, by the first communications device, a second message to the second communications device, the method further comprises:
Sending (304a, 304b), by the first communications device, changed information to the second communications device.

6. A communication method, comprising:
receiving, by a second communications device, a first message from a first communications device, wherein
the first message indicates configuration information of the first communications device and first duration, and the first duration is duration in which the second communications device stores the configuration information of the first communications device,
wherein the first message further comprises second duration, and the second duration is duration in which the first communications device maintains a current connection to the second communications device,
wherein the first communications device is a base station, and the second communications device is an access and management function, AMF, entity, or a base station; or
the first communications device is a relay device between a terminal device and a base station, or serves as a remote radio unit, RRU, of a base station, and the second communications device is the base station; or
the first communications device is a distributed unit, DU, and the second communications device is a centralized unit, CU.

7. The method according to claim 6, wherein after the receiving, by a second communications device, a first message from a first communications device, the method further comprises:
determining, by the second communications device, whether time elapsed since the receiving the first message from the first communications device until a current moment is less than the first duration; and
if the time elapsed since the receiving the first message from the first communications device until the current moment is less than the first duration, continuing to store, by the second communications device, the configuration information of the first communications device; and in a process of reestablishing a connection between the second communications device and the first communications device, when the second communications device receives a connection indication from the first communications device, restoring the connection to the first communications device based on the stored configuration information of the first communications device; or
if the time elapsed since the receiving the first message from the first communications device until the current moment is not less than the first duration, deleting, by the second communications device, the configuration information of the first communications device; and in a process of reestablishing a connection between the second communications device and the first communications device, receiving again, by the second communications device, the configuration information of the first communications device from the first communications device, and establishing the connection to the first communications device based on the configuration information of the first communications device.

8. The method according to claim 6 or claim 7, wherein after the receiving, by a second communications device, a first message from a first communications device, the method further comprises:
when the second communications device determines that time elapsed since receiving the second duration from the first communications device until the current moment exceeds the second duration, releasing, by the second communications device, the connection between the first communications device and the second communications device.

9. The method according to any of claims 6-8, wherein after the receiving, by a second communications device, a first message from a first communications device, the method further comprises:
in the process of reestablishing the connection between the second communications device and the first communications device, receiving, by the second communications device, a second message from the first communications device, wherein
the second message includes an information changed indication, and the information changed indication is used to notify the second communications device that any one of or a combination of the following information changes: the configuration information of the first communications device, the first duration, and the second duration.

10. The method according to claim 9, wherein after the receiving, by the second communications device, a second message from the first communications device, the method further comprises:
receiving, by the second communications device, changed information from the first communications device.

11. A first communication device, comprising units configured to perform the method according to any one of claims 1-5.

12. A second communication device, comprising units configured to perform the method according to any of claims 6-10.

13. A communication system, comprising the first communication device according to any one of claims 1-5 and the second communication device according to any one of claims 6-10.

14. A computer program, wherein when the computer program is run on a computer, the computer is enabled to perform the method according to any of claims 1-5, or any of claims 6-10.

15. A computer storage medium storing a computer program, wherein when the computer program is executed by a computer, the computer is enabled to perform the method according to any of claims 1-5, or any of claims 6-10.

## Patentansprüche

1. Kommunikationsverfahren, umfassend:
Erzeugen (S301) einer ersten Nachricht durch eine erste Kommunikationsvorrichtung; und
Senden (S301) der ersten Nachricht durch die erste Kommunikationsvorrichtung an eine zweite Kommunikationsvorrichtung, wobei
die erste Nachricht Konfigurationsinformationen der ersten Kommunikationsvorrichtung und eine erste Dauer anzeigt und die erste Dauer eine Dauer ist, in der die zweite Kommunikationsvorrichtung die Konfigurationsinformationen der ersten Kommunikationsvorrichtung speichert,
wobei die erste Nachricht ferner eine zweite Dauer umfasst und die zweite Dauer eine Dauer ist, in der die erste Kommunikationsvorrichtung eine aktuelle Verbindung mit der zweiten Kommunikationsvorrichtung aufrechterhält,
wobei die erste Kommunikationsvorrichtung eine Basisstation ist und die zweite Kommunikationsvorrichtung eine Zugangs- und Verwaltungsfunktionsentität, AMF-Entität, oder eine Basisstation ist; oder
die erste Kommunikationsvorrichtung eine Weiterleitungsvorrichtung zwischen einer Endgerätevorrichtung und einer Basisstation ist oder als eine entfernte Funkeinheit, RRU, einer Basisstation dient und die zweite Kommunikationsvorrichtung die Basisstation ist; oder
die erste Kommunikationsvorrichtung eine verteilte Einheit, DU, ist und die zweite Kommunikationsvorrichtung eine zentrale Einheit, CU, ist.

2. Verfahren nach Anspruch 1, wobei das Verfahren nach dem Senden der ersten Nachricht durch die erste Kommunikationsvorrichtung an eine zweite Kommunikationsvorrichtung ferner Folgendes umfasst:
in einem Prozess zur Wiederherstellung einer Verbindung zwischen der ersten Kommunikationsvorrichtung und der zweiten Kommunikationsvorrichtung Bestimmen durch die erste Kommunikationsvorrichtung, ob eine Zeit, die seit dem Senden der ersten Nachricht an die zweite Kommunikationsvorrichtung bis zu einem aktuellen Zeitpunkt verstrichen ist, kürzer als die erste Dauer ist; und,
falls die Zeit, die seit dem Senden der ersten Nachricht an die zweite Kommunikationsvorrichtung bis zu dem aktuellen Zeitpunkt verstrichen ist, kürzer als die erste Dauer ist, Senden (S302a) einer Verbindungsanzeige durch die erste Kommunikationsvorrichtung an die zweite Kommunikationsvorrichtung, wobei die Verbindungsanzeige verwendet wird, um die zweite Kommunikationsvorrichtung zu benachrichtigen, dass sie die Verbindung mit der ersten Kommunikationsvorrichtung basierend auf den gespeicherten Konfigurationsinformationen der ersten Kommunikationsvorrichtung wiederherstellen soll; oder,
falls die Zeit, die seit dem Senden der ersten Nachricht an die zweite Kommunikationsvorrichtung bis zu dem aktuellen Zeitpunkt verstrichen ist, nicht kürzer als die erste Dauer ist, erneutes Senden (S302b) der Konfigurationsinformationen der ersten Kommunikationsvorrichtung durch die erste Kommunikationsvorrichtung an die zweite Kommunikationsvorrichtung und Herstellen der Verbindung mit der zweiten Kommunikationsvorrichtung basierend auf den Konfigurationsinformationen der ersten Kommunikationsvorrichtung.

3. Verfahren nach Anspruch 1, wobei das Verfahren nach dem Senden der ersten Nachricht durch die erste Kommunikationsvorrichtung an eine zweite Kommunikationsvorrichtung ferner Folgendes umfasst:
wenn die erste Kommunikationsvorrichtung bestimmt, dass Zeit, die seit dem Senden der zweiten Dauer an die zweite Kommunikationsvorrichtung bis zu dem aktuellen Zeitpunkt verstrichen ist, die zweite Dauer überschreitet, Freigeben der Verbindung zwischen der ersten Kommunikationsvorrichtung und der zweiten Kommunikationsvorrichtung durch die erste Kommunikationsvorrichtung.

4. Verfahren nach einem der Ansprüche 1-3, wobei das Verfahren nach dem Senden der ersten Nachricht durch die erste Kommunikationsvorrichtung an eine zweite Kommunikationsvorrichtung ferner Folgendes umfasst:
in dem Prozess zur Wiederherstellung der Verbindung zwischen der ersten Kommunikationsvorrichtung und der zweiten Kommunikationsvorrichtung Senden (303a, 303b) einer zweiten Nachricht durch die erste Kommunikationsvorrichtung an die zweite Kommunikationsvorrichtung, wobei
die zweite Nachricht eine Informationsänderungsanzeige umfasst und die Informationsänderungsanzeige verwendet wird, um die zweite Kommunikationsvorrichtung zu benachrichtigen, dass sich eine der folgenden Informationen oder eine Kombination davon ändert:
die Konfigurationsinformationen der ersten Kommunikationsvorrichtung, die erste Dauer und die zweite Dauer.

5. Verfahren nach Anspruch 4, wobei das Verfahren nach dem Senden einer zweiten Nachricht durch die erste Kommunikationsvorrichtung an die zweite Kommunikationsvorrichtung ferner Folgendes umfasst:
Senden (304a, 304b) geänderter Informationen durch die erste Kommunikationsvorrichtung an die zweite Kommunikationsvorrichtung.

6. Kommunikationsverfahren, umfassend:
Empfangen einer ersten Nachricht durch eine zweite Kommunikationsvorrichtung von einer ersten Kommunikationsvorrichtung, wobei
die erste Nachricht Konfigurationsinformationen der ersten Kommunikationsvorrichtung und eine erste Dauer anzeigt und die erste Dauer eine Dauer ist, in der die zweite Kommunikationsvorrichtung die Konfigurationsinformationen der ersten Kommunikationsvorrichtung speichert,
wobei die erste Nachricht ferner eine zweite Dauer umfasst und die zweite Dauer eine Dauer ist, in der die erste Kommunikationsvorrichtung eine aktuelle Verbindung mit der zweiten Kommunikationsvorrichtung aufrechterhält,
wobei die erste Kommunikationsvorrichtung eine Basisstation ist und die zweite Kommunikationsvorrichtung eine Zugangs- und Verwaltungsfunktionsentität, AMF-Entität, oder eine Basisstation ist; oder
die erste Kommunikationsvorrichtung eine Weiterleitungsvorrichtung zwischen einer Endgerätevorrichtung und einer Basisstation ist oder als eine entfernte Funkeinheit, RRU, einer Basisstation dient und die zweite Kommunikationsvorrichtung die Basisstation ist; oder
die erste Kommunikationsvorrichtung eine verteilte Einheit, DU, ist und die zweite Kommunikationsvorrichtung eine zentrale Einheit, CU, ist.

7. Verfahren nach Anspruch 6, wobei das Verfahren nach dem Empfangen einer ersten Nachricht durch eine zweite Kommunikationsvorrichtung von einer ersten Kommunikationsvorrichtung ferner Folgendes umfasst:
Bestimmen durch die zweite Kommunikationsvorrichtung, ob eine Zeit, die seit dem Empfangen der ersten Nachricht von der ersten Kommunikationsvorrichtung bis zu einem aktuellen Zeitpunkt verstrichen ist, kürzer als die erste Dauer ist; und,
falls die Zeit, die seit dem Empfangen der ersten Nachricht von der ersten Kommunikationsvorrichtung bis zu dem aktuellen Zeitpunkt verstrichen ist, kürzer als die erste Dauer ist, Fortfahren mit dem Speichern der Konfigurationsinformationen der ersten Kommunikationsvorrichtung durch die zweite Kommunikationsvorrichtung;
und in einem Prozess zur Wiederherstellung einer Verbindung zwischen der zweiten Kommunikationsvorrichtung und der ersten Kommunikationsvorrichtung Wiederherstellen der Verbindung mit der ersten Kommunikationsvorrichtung basierend auf den gespeicherten Konfigurationsinformationen der ersten Kommunikationsvorrichtung, wenn die zweite Kommunikationsvorrichtung eine Verbindungsanzeige von der ersten Kommunikationsvorrichtung empfängt; oder,
falls die Zeit, die seit dem Empfangen der ersten Nachricht von der ersten Kommunikationsvorrichtung bis zu dem aktuellen Zeitpunkt verstrichen ist, nicht kürzer als die erste Dauer ist, Löschen der Konfigurationsinformationen der ersten Kommunikationsvorrichtung durch die zweite Kommunikationsvorrichtung; und in einem Prozess zur Wiederherstellung einer Verbindung zwischen der zweiten Kommunikationsvorrichtung und der ersten Kommunikationsvorrichtung erneutes Empfangen der Konfigurationsinformationen der ersten Kommunikationsvorrichtung durch die zweite Kommunikationsvorrichtung von der ersten Kommunikationsvorrichtung und Herstellen der Verbindung mit der ersten Kommunikationsvorrichtung basierend auf den Konfigurationsinformationen der ersten Kommunikationsvorrichtung.

8. Verfahren nach Anspruch 6 oder 7, wobei das Verfahren nach dem Empfangen einer ersten Nachricht durch eine zweite Kommunikationsvorrichtung von einer ersten Kommunikationsvorrichtung ferner Folgendes umfasst:
wenn die zweite Kommunikationsvorrichtung bestimmt, dass die Zeit, die seit dem Empfangen der zweiten Dauer von der ersten Kommunikationsvorrichtung bis zu dem aktuellen Zeitpunkt verstrichen ist, die zweite Dauer überschreitet, Freigeben der Verbindung zwischen der ersten Kommunikationsvorrichtung und der zweiten Kommunikationsvorrichtung durch die zweite Kommunikationsvorrichtung.

9. Verfahren nach einem der Ansprüche 6-8, wobei das Verfahren nach dem Empfangen einer ersten Nachricht durch eine zweite Kommunikationsvorrichtung von einer ersten Kommunikationsvorrichtung ferner Folgendes umfasst:
in dem Prozess zur Wiederherstellung der Verbindung zwischen der zweiten Kommunikationsvorrichtung und der ersten Kommunikationsvorrichtung Empfangen einer zweiten Nachricht durch die zweite Kommunikationsvorrichtung von der ersten Kommunikationsvorrichtung, wobei
die zweite Nachricht eine Informationsänderungsanzeige umfasst und die Informationsänderungsanzeige verwendet wird, um die zweite Kommunikationsvorrichtung zu benachrichtigen, dass sich eine der folgenden Informationen oder eine Kombination davon ändert: die Konfigurationsinformationen der ersten Kommunikationsvorrichtung, die erste Dauer und die zweite Dauer.

10. Verfahren nach Anspruch 9, wobei das Verfahren nach dem Empfangen einer ersten Nachricht durch die zweite Kommunikationsvorrichtung von der ersten Kommunikationsvorrichtung ferner Folgendes umfasst:
Empfangen von geänderten Informationen durch die zweite Kommunikationsvorrichtung von der ersten Kommunikationsvorrichtung.

11. Erste Kommunikationsvorrichtung, umfassend Einheiten, die zum Durchführen des Verfahrens nach einem der Ansprüche 1-5 konfiguriert sind.

12. Zweite Kommunikationsvorrichtung, umfassend Einheiten, die zum Durchführen des Verfahrens nach einem der Ansprüche 6-10 konfiguriert sind.

13. Kommunikationssystem, umfassend die erste Kommunikationsvorrichtung nach einem der Ansprüche 1-5 und die zweite Kommunikationsvorrichtung nach einem der Ansprüche 6-10.

14. Computerprogramm, wobei, wenn das Computerprogramm auf einem Computer ausgeführt wird, der Computer zum Durchführen eines Verfahrens nach einem der Ansprüche 1-5 oder 6-10 in der Lage ist.

15. Computerspeichermedium, das ein Computerprogramm speichert, wobei, wenn das Computerprogramm von einem Computer ausgeführt wird, der Computer zum Durchführen des Verfahrens nach einem der Ansprüche 1-5 oder 6-10 in der Lage ist.

## Revendications

1. Procédé de communication, comprenant les étapes consistant à :
générer (S301), par un premier dispositif de communication, un premier message ; et
envoyer (S301), par le premier dispositif de communication, le premier message à un deuxième dispositif de communication, dans lequel
le premier message indique des informations de configuration du premier dispositif de communication et une première durée, et la première durée est une durée au cours de laquelle le deuxième dispositif de communication stocke les informations de configuration du premier dispositif de communication,
dans lequel le premier message comprend également une deuxième durée, et la deuxième durée est une durée au cours de laquelle le premier dispositif de communication maintient une connexion actuelle avec le deuxième dispositif de communication,
dans lequel le premier dispositif de communication est une station de base, et le deuxième dispositif de communication est une entité de fonction d'accès et de gestion, AMF, ou une station de base ; ou
le premier dispositif de communication est un dispositif relais entre un dispositif terminal et une station de base, ou sert d'unité radio distante, RRU, d'une station de base, et le deuxième dispositif de communication est la station de base ; ou
le premier dispositif de communication est une unité distribuée, DU, et le deuxième dispositif de communication est une unité centralisée, CU.

2. Procédé selon la revendication 1, le procédé, après l'envoi par le premier dispositif de communication du premier message à un deuxième dispositif de communication, comprenant également les étapes consistant à :
dans un processus de rétablissement d'une connexion entre le premier dispositif de communication et le deuxième dispositif de communication, déterminer, par le premier dispositif de communication, si le temps écoulé entre l'envoi du premier message au deuxième dispositif de communication et un moment actuel est inférieur à la première durée ; et
si le temps écoulé entre l'envoi du premier message au deuxième dispositif de communication et le moment actuel est inférieur à la première durée, envoyer (S302a), par le premier dispositif de communication, une indication de connexion au deuxième dispositif de communication, l'indication de connexion étant utilisée pour indiquer au deuxième dispositif de communication de restaurer la connexion avec le premier dispositif de communication sur la base des informations de configuration stockées du premier dispositif de communication ; ou
si le temps écoulé entre l'envoi du premier message au deuxième dispositif de communication et le moment actuel n'est pas inférieur à la première durée, envoyer de nouveau (S302b), par le premier dispositif de communication, les informations de configuration du premier dispositif de communication au deuxième dispositif de communication, et établir la connexion avec le deuxième dispositif de communication sur la base des informations de configuration du premier dispositif de communication.

3. Procédé selon la revendication 1, le procédé, après l'envoi par le premier dispositif de communication du premier message à un deuxième dispositif de communication, comprenant également l'étape consistant à :
lorsque le premier dispositif de communication détermine que le temps écoulé entre l'envoi de la deuxième durée au deuxième dispositif de communication et le moment actuel dépasse la deuxième durée, libérer, par le premier dispositif de communication, la connexion entre le premier dispositif de communication et le deuxième dispositif de communication.

4. Procédé selon l'une quelconque des revendications 1 à 3, le procédé, après l'envoi par le premier dispositif de communication du premier message à un deuxième dispositif de communication, comprenant également l'étape consistant à :
dans le processus de rétablissement de la connexion entre le premier dispositif de communication et le deuxième dispositif de communication, envoyer (303a, 303b), par le premier dispositif de communication, un deuxième message au deuxième dispositif de communication,
le deuxième message contenant une indication de modification d'informations, et l'indication de modification d'informations étant utilisée pour notifier au deuxième dispositif de communication que l'une quelconque des informations suivantes ou une combinaison de celles-ci a été modifiée : les informations de configuration du premier dispositif de communication, la première durée, et la deuxième durée.

5. Procédé selon la revendication 4, le procédé, après l'envoi par le premier dispositif de communication d'un deuxième message au deuxième dispositif de communication, comprenant également l'étape consistant à :
envoyer (304a, 304b), par le premier dispositif de communication, des informations modifiées au deuxième dispositif de communication.

6. Procédé de communication, comprenant l'étape consistant à :
recevoir, par un deuxième dispositif de communication, un premier message provenant d'un premier dispositif de communication, dans lequel
le premier message indique des informations de configuration du premier dispositif de communication et une première durée, et la première durée est une durée au cours de laquelle le deuxième dispositif de communication stocke les informations de configuration du premier dispositif de communication,
dans lequel le premier message comprend également une deuxième durée, et la deuxième durée est une durée au cours de laquelle le premier dispositif de communication maintient une connexion actuelle avec le deuxième dispositif de communication,
dans lequel le premier dispositif de communication est une station de base, et le deuxième dispositif de communication est une entité de fonction d'accès et de gestion, AMF, ou une station de base ; ou
le premier dispositif de communication est un dispositif relais entre un dispositif terminal et une station de base, ou sert d'unité radio distante, RRU, d'une station de base, et le deuxième dispositif de communication est la station de base ; ou
le premier dispositif de communication est une unité distribuée, DU, et le deuxième dispositif de communication est une unité centralisée, CU.

7. Procédé selon la revendication 6, le procédé, après la réception par un deuxième dispositif de communication d'un premier message provenant d'un premier dispositif de communication, comprenant également les étapes consistant à :
déterminer, par le deuxième dispositif de communication, si le temps écoulé entre la réception du premier message provenant du premier dispositif de communication et un moment actuel est inférieur à la première durée ; et
si le temps écoulé entre la réception du premier message provenant du premier dispositif de communication et le moment actuel est inférieur à la première durée, continuer à stocker, par le deuxième dispositif de communication, les informations de configuration du premier dispositif de communication ; et dans un processus de rétablissement d'une connexion entre le deuxième dispositif de communication et le premier dispositif de communication, lorsque le deuxième dispositif de communication reçoit une indication de connexion provenant du premier dispositif de communication, restaurer la connexion avec le premier dispositif de communication sur la base des informations de configuration stockées du premier dispositif de communication ; ou
si le temps écoulé entre la réception du premier message provenant du premier dispositif de communication et le moment actuel n'est pas inférieur à la première durée, supprimer, par le deuxième dispositif de communication, les informations de configuration du premier dispositif de communication ; et dans un processus de rétablissement d'une connexion entre le deuxième dispositif de communication et le premier dispositif de communication, recevoir de nouveau, par le deuxième dispositif de communication, les informations de configuration du premier dispositif de communication provenant du premier dispositif de communication, et établir la connexion avec le premier dispositif de communication sur la base des informations de configuration du premier dispositif de communication.

8. Procédé selon la revendication 6 ou la revendication 7, le procédé, après la réception par un deuxième dispositif de communication d'un premier message provenant d'un premier dispositif de communication, comprenant également l'étape consistant à :
lorsque le deuxième dispositif de communication détermine que le temps écoulé entre la réception de la deuxième durée provenant du premier dispositif de communication et le moment actuel dépasse la deuxième durée, libérer, par le deuxième dispositif de communication, la connexion entre le premier dispositif de communication et le deuxième dispositif de communication.

9. Procédé selon l'une quelconque des revendications 6 à 8, le procédé, après la réception par un deuxième dispositif de communication d'un premier message provenant d'un premier dispositif de communication, comprenant également l'étape consistant à :
dans le processus de rétablissement de la connexion entre le deuxième dispositif de communication et le premier dispositif de communication, recevoir, par le deuxième dispositif de communication, un deuxième message provenant du premier dispositif de communication,
le deuxième message contenant une indication de modification d'informations, et l'indication de modification d'informations étant utilisée pour notifier au deuxième dispositif de communication que l'une quelconque des informations suivantes ou une combinaison de celles-ci a été modifiée : les informations de configuration du premier dispositif de communication, la première durée, et la deuxième durée.

10. Procédé selon la revendication 9, le procédé, après la réception par le deuxième dispositif de communication d'un deuxième message provenant du premier dispositif de communication, comprenant également l'étape consistant à :
recevoir, par le deuxième dispositif de communication, des informations modifiées provenant du premier dispositif de communication.

11. Premier dispositif de communication, comprenant des unités configurées pour réaliser le procédé selon l'une quelconque des revendications 1 à 5.

12. Deuxième dispositif de communication, comprenant des unités configurées pour réaliser le procédé selon l'une quelconque des revendications 6 à 10.

13. Système de communication, comprenant le premier dispositif de communication selon l'une quelconque des revendications 1 à 5 et le deuxième dispositif de communication selon l'une quelconque des revendications 6 à 10.

14. Programme informatique, tel que lorsque le programme informatique est exécuté sur un ordinateur, l'ordinateur est activé pour réaliser le procédé selon l'une quelconque des revendications 1 à 5 ou l'une quelconque des revendications 6 à 10.

15. Support de stockage informatique stockant un programme informatique, de telle sorte que lorsque le programme informatique est exécuté par un ordinateur, l'ordinateur est activé pour réaliser le procédé selon l'une quelconque des revendications 1 à 5 ou l'une quelconque des revendications 6 à 10.
